# EUROPEAN PATENT SPECIFICATION

(11) **EP 1 720 696 B1**
(45) Date of publication and mention of the grant of the patent: **09.04.2008**
(21) Application number: 05719014.2
(22) Date of filing: 25.02.2005
(51) Int. Cl.: B29D 30/06, B60C 5/01

(54) **E.V.A. MOULDED TYRE WITHOUT INNER TUBE TO BE APPLIED ON PRAMS OR TROLLEYS**
SPRITZGEGOSSENER EVA-REIFEN OHNE INNENSCHLAUCH ZUM ANBRINGEN AN KINDERWAGEN UND HANDWAGEN
PNEUMATIQUE E.V.A MOULE SANS CHAMBRE A AIR DESTINE A DES LANDAUS OU DES CHARIOTS

(30) Priority: 26.02.2004 IT MC20040029
(43) Date of publication of application: 15.11.2006
(73) Proprietor: Alemplast S.r.l., 60025 Loreto (IT)
(72) Inventor: MENGHI, Gianluca, I-62100 Macerata (IT)
(74) Representative: Baldi, Claudio
(86) International application number: PCT/IT2005/000104
(87) International publication number: WO 2005/082608

(56) References cited:
- FR-A- 1 345 918
- FR-A- 2 334 491
- GB-A- 1 159 675
- US-A- 4 253 512
- US-A- 5 551 763
- US-A1- 2004 007 301
- US-B1- 6 321 806

## Description

The present patent application for industrial invention concerns an E.V.A. moulded tyre to be applied on prams or trolleys, which is hollow internally and lacks the inner tube.

As it is known, most pram wheels use traditional tyres, that is to say tyres provided with inner tube.

Similar tyres are rather satisfactory in terms of functional efficiency; however, they are impaired by the need to be provided with inner tube.

The presence of the inner tube increases the cost and requires the user to check the inner tube pressure on a regular basis.

The only alternative solution that is currently available is represented by the use of solid wheels made of rubber or other suitable material.

However, it can be easily understood that the use of this type of solid wheels considerably reduces comfort due to the lower shock absorbing capacity of ground unevenness of this type of wheels compared with inner tube tyres.

As mentioned above, the main purpose of the present invention is to devise a tyre that, although not provided with inner tube, is internally hollow and characterised by satisfactory shock-absorbing capacities.

The solution that has permitted to achieve the aforementioned technical-functional purpose is represented by the realisation of the wheel of the invention with a moulded thermoplastic material, commonly known as E.V.A.

After being moulded in a suitable mould, E.V.A. material tends to increase volume suddenly when it is extracted from the mould and spontaneously maintain dimensional and structural stability.

This characteristic and the use of a suitable mould have permitted to realise a tyre that, although without inner tube, does not subside uncontrollably like traditional tyres when the inner tube is removed or deflated.

British patent No. GB 1159675 relates to a tyre comprising a pair of spaced beads and a shaped flexible composition extending from one bead to the other to form the sidewall portions and tread portion of the tyre. EVA is only one of the moulding materials identified in the GB patent as composition from which the tyre can be formed.

The characteristics of the tyre according to the present invention are recited in claim 1. A particular embodiment of the invention is defined in claim 2.

The new tyre of the invention, normally provided with a basically C-shaped transversal section, has self-standing walls capable of ensuring the presence of the traditional annular cavity with constant section inside the tyre.

It must be noted that E.V.A. is also characterised by elastic deformation capacity; this characteristic is especially advantageous since it guarantees good shock-absorbing capacities of the tyre of the invention.

Additionally, the intrinsic elasticity of E.V.A. permits to force the two lateral opposite walls (i.e. sides) of the tyre closer until they touch the free borders (beads) of the tyre, without impairing the presence of the internal cavity.

Following the forced movement, the beads of the new tyre of the invention can be housed inside the channel of the rim where the tyre is to be mounted.

In view of the fact that the intrinsic elasticity of E.V.A. tends to bring back the two beads to the initial diverged position, it appears evident that the beads can interfere with great energy against the borders of the rim channel, since the borders oppose the spontaneous diverging tendency of the beads.

This situation guarantees the stable safe matching of the tyre inside the rim, without using external fixing means.

For major clarity the description of the invention continues with reference to the enclosed drawings, which are intended for purposes of illustration only and not in a limiting sense, whereby:
- Figure 1 is a view of the mould with core used to mould the tyre of the invention;
- Figure 2 is the same view as Figure 1, with the mould in open position,
- Figure 3 is an axonometric view of the mould core, before removing the tyre of the invention from the mould;
- Figure 4 is a cross-section of a wheel provided with the tyre of the invention with a diametrical plane;
- Figure 5 is a view of the wheel complete with the tyre shown in Figure 4.

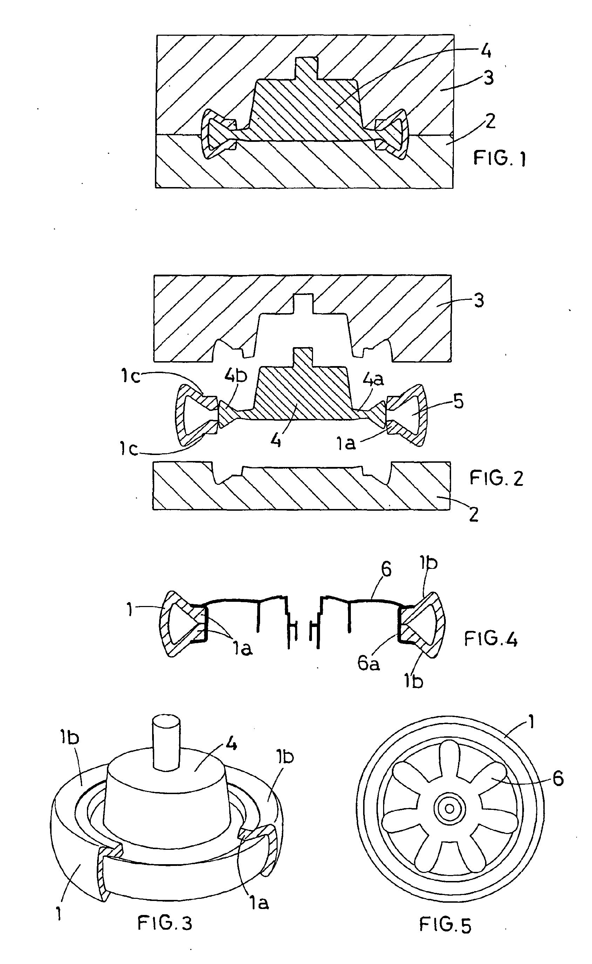

With reference to Figures 1, 2 and 3, the tyre of the invention (1) is an E.V.A. moulded tyre obtained with a special mould (2) provided with closing lid (3), which houses a special truncated-conical core (4), inferiorly provided with a circular border with horizontal direction (4a) connected with a sort of perimetrical collar (4b) with basically triangular cross-section.

Once the core (4) is tightened between the mould (2) and the lid (3), an annular cavity with basically C-shaped cross-section is formed around the perimetrical collar (4b), in which the moulding material, that is to say E.V.A., is injected.

As shown in Figure 3, once it consolidates, the material forms the tyre of the invention.

As mentioned earlier, the special characteristic of E.V.A. moulded manufactures is represented by volume increase when they are extracted from the mould.

This spontaneous tendency of E.V.A. results in the spontaneous removal of the moulded tyre (1) from the moulding core (4), as illustrated in Figure 2.

Figure 2 also illustrates the spontaneous tendency of the tyre (1) to guarantee the presence of the internal annular cavity (5) with constant section, due to E.V.A. self-standing capacity.

Figure 4 illustrates the different modes used to insert the tyre (1) inside the channel (6a) of the rim (6).

Particularly, the two beads (1 a) of the tyre (1) are compressed one against the other, overcoming their spontaneous diverging tendency until their global volume allows them to be inserted and spontaneously held inside the channel (6a) of the rim (6).

To provide higher stability to the matching between the pneumatic (1) and the rim (6), the tyre of the invention is provided with teeth (1c) in external position on the sides (1b) upstream of the beads (1a), which cooperate with the borders of the channel (6a) of the rim (6).

The presence of the teeth (1 c) is illustrated in Figure 2; the cooperation of the teeth (1c) with the borders of the channel (6a) is illustrated in Figure 4.

## Claims

1. A tyre without inner tube for prams or trolleys of the type formed by E.V.A. injection moulding, said tyre being provided with a perimetrical internal cavity (5) bordered by elastic flexible sides (1b), **characterised in that** the E.V.A. material is such that after being moulded in a suitable mould, it tends to increase volume suddenly when it is extracted from the mould and spontaneously maintain dimensional and structural stability, said material having an elastic deformation capacity such as to bring the beads (1) of the flexible sides (1 b) in mutual contact.

2. Tyre as defined in claim 1, **characterised in that** it is provided with teeth (1c) on the flexible sides (1b) upstream of the beads (1a), which cooperate with the borders of the channel (6a) of the rim (6) where it is mounted.

## Patentansprüche

1. Reifen ohne Luftkammer für Kinderwagen oder Gepäckwagen aus E.V.A.-Spritzguss besitzt einen umlaufenden internen Hohlraum (5), der durch flexible Seitenteile (1 b) begrenzt wird, und ist **dadurch gekennzeichnet, dass** das E.V.A.-Material nach dem Spritzguss, wenn es entformt wird, zu einer plötzlichen Volumenzunahme und zur spontanen Beibehaltung seiner Struktur- und Dimensionsstabilität neigt, wobei vorgesehen ist, dass die elastische Verformbarkeit des Materials es ermöglicht, die Wulste (1a) der flexiblen Seitenteile (1b) in Anschlag zueinander zu bringen.

2. Reifen gemäß Anspruch 1), **dadurch gekennzeichnet, dass** er an seinen flexiblen Seitenteilen (1 b) vor den Wulsten (1 a) vorgelagerte Anschlagzähne (1 c) aufweist, die dazu dienen, mit den Kanten des Kanals (6a) der Felge (6), auf der er montiert wird, zusammenwirken.

## Revendications

1. Pneu démuni de chambre à air pour voitures d'enfant ou chariots du type moulé en E.V.A., le dit pneu présentant une cavité interne sur tout le périmètre (5) et dite cavité étant délimitée par des côtés flexibles (1 b), pneu **caractérisé en ce que** le dit matériau E.V.A. est tel que, après moulage dans un moule prévu à cet effet, il tend soudainement à augmenter de volume lorsqu'on l'extrait du moule et à maintenir spontanément sa stabilité dimensionnelle et structurelle, étant prévu que dit matériau soit doté d'une capacité de déformation élastique telle à consentir de pouvoir amener à battement réciproque les tallons (1 a) des côtés flexibles (1 b).

2. Pneu selon la revendication 1), **caractérisé en ce qu'**il présente, en correspondance de ses côtés flexibles (1 b), en amont des dits talons (1a), des respectives dents de battement (1 c) aptes à coopérer avec les bords du canal (6a) de la jante de destination (6)
